(19) Europäisches Patentamt
European Patent Office
Office européen des brevets

(11) **EP 3 552 904 B1**

(12) **EUROPEAN PATENT SPECIFICATION**

(45) Date of publication and mention
of the grant of the patent:
**31.05.2023  Bulletin 2023/22**

(21) Application number: **18166501.9**

(22) Date of filing: **10.04.2018**

(51) International Patent Classification (IPC):
**G01C 21/36** (2006.01)

(52) Cooperative Patent Classification (CPC):
**G01C 21/3691; G06F 18/29;** G06V 20/56

(54) **METHOD, DEVICE AND COMPUTER PROGRAM PRODUCT FOR PREDICTING THE DEVELOPMENT OF A TRAFFIC SCENE INVOLVING SEVERAL PARTICIPANTS**

VERFAHREN, VORRICHTUNG UND COMPUTERPROGRAMMPRODUKT ZUR VORHERSAGE DER ENTWICKLUNG EINER VERKEHRSSZENE MIT MEHREREN TEILNEHMERN

PROCÉDÉ, DISPOSITIF ET PRODUIT_PROGRAMME INFORMATIQUE PERMETTANT DE PRÉDIRE LE DÉVELOPPEMENT D'UNE SCÈNE DE CIRCULATION IMPLIQUANT PLUSIEURS PARTICIPANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2019  Bulletin 2019/42**

(73) Proprietor: **Bayerische Motoren Werke Aktiengesellschaft**
**80809 München (DE)**

(72) Inventors:
• **SCHULZ, Jens**
**80469 München (DE)**

• **LÖCHNER, Julian**
**85716 Unterschleißeim (DE)**
• **HUBMANN, Constantin**
**80469 München (DE)**

(56) References cited:
**EP-A1- 2 615 598     US-A1- 2018 074 505**
**US-B1- 9 381 916**

• **Stéphanie Lefèvre ET AL: "Modelling Dynamic Scenes at Unsignalised Road Intersections", , 1 April 2011 (2011-04-01), page 588758, XP055515486, Retrieved from the Internet: URL:https://hal.inria.fr/inria-00588758/document [retrieved on 2018-10-09]**

**Description**

The invention relates to a method, a device and a computer program product for predicting the development of a traffic scene involving several participants.

In the area of autonomous vehicles, intention estimation and motion prediction of traffic participants have been studied and are generally tackled separately.

EP 2 615 598 A1 discloses a anticipatory monitoring and prediction system comprising methods for generating effective, accurate predictions of other traffic objects in the vicinity of an ego-car. To this end the invention proposes to combine approximate probability distributions (ADPs) of agent states with Attractor Functions (AFs) for generating distributed probabilistic representations of the potential future states of the observed traffic objects. For maximal accuracy, AFs are selected based on both the current road context, in which the ego-car is situated, and the current states of all participating objects. The generated predictions can be used to filter incoming sensory information for better object state estimations, to rate the normality or the hazardous nature of the behavior of other traffic objects by comparing generated predictions with actual perceived sensor information, or to infer accident likelihoods by comparing the predicted state distributions of objects and the ego-car. Further, warning and information signals in a driving assistance system or actual control commands for preventing accidents can be issued.

Stéphanie Lefèvre ET AL, "Modelling Dynamic Scenes at Unsignalised Road Intersections", page 588758, URL: https://hal.inria.fr/inria-00588758/document, discloses, that understanding dynamic scenes at road intersections is both crucial and challenging for intelligent vehicles. In order to detect potentially dangerous situations, algorithms are needed that can interpret the behaviour of the actors in the scene and predict its likely evolution. The difficulty of this task arises from the large number of possible scenarios. The conventional answer to this issue is to discard vehicle interactions in the manoeuvre prediction process, i.e. to infer the manoeuvre performed by each vehicle from its past and current behaviour, independently from the other vehicles in the scene. It is shown how this affects collision risk estimation in very common scenarios, making it unusable in practice for Advanced Driver Assistance Systems (ADAS) applications. As an alternative a probabilistic model for vehicles traversing unsignalised intersections is proposed, that accounts for the mutual influence between vehicle manoeuvres. The focus is on the utilisation of contextual information (i.e. layout of the intersection, presence of other vehicles and traffic rules) to interpret a vehicle's behaviour. It is further shown, that the model can be used for accurate situation and risk assessment.

An object of the current invention is to provide a method, a device and a computer program product for predicting the development of a traffic scene involving several participants, which contributes to a precise prediction.

This object is achieved by the method, the device and the computer program product according to the independent claims. In particular, the subject-matter of the independent claims may contribute to an automatic generation of route hypotheses and maneuver hypotheses given a map and participant poses and/or handling a varying number of traffic participants and various intersection layouts and/or handling uncertainty in both measurements and human behavior and/or handling a combinatoric interaction between traffic participants.

According to an embodiment of the present invention, for predicting the development of a traffic scene involving several participants a map with corresponding map related information is provided. Each participant is characterized by a participant tuple and the participant tuple comprises a state tuple of several state properties, a route intention characterization, a maneuver intention characterization and an action intention characterization. The state tuple of several state properties for each participant represents a global position and a heading and an absolute velocity of the participant. The traffic scene is characterized by a scene tuple comprising one participant tuple for each participant. A noisy measurement is obtained, wherein the noisy measurement comprises for each participant a position measurement and a heading measurement and an absolute velocity measurement of the participant. Further, a conditional probability distribution of the scene tuple is generated depending on the noisy measurement and the map. The generation of the conditional probability distribution of the scene tuple comprises generating a conditional probability distribution of the state tuple at a given current point in time for each participant depending on the map and the noisy measurement. Further, a conditional probability distribution of the route intention characterization is generated at the current point in time for each participant depending on the map and the respective state tuple. Furthermore, a conditional probability distribution of the maneuver intention characterization is generated at the current point in time for each participant depending on the map, the respective route intention characterization of the participant and under consideration of the state tuples of the other participants. Also, a conditional probability distribution of the action intention characterization is generated at the current point in time for each participant depending on the map, the state tuple of the respective participant, the maneuver intention characterization of the respective participant and under consideration of the state tuples of the other participants, wherein for a given next point in time the probability distribution of the state tuple is predicted at the given next point in time for each participant depending on the state tuple at the given current point in time and the action intention characterization at the current point in time for the respective participant.

All elements of the tuples can, for example, be represented by probability distributions and / or deterministic values. Such probability distributions can, for example, be represented by a set of particles and / or a Gaussian distribution and / or any other form of distribution.

According to a further optional embodiment, for generating the conditional probability distribution of the scene tuple a stochastic filter and/or a multiple model Kalman filter and/or a multiple model unscented Kalman filter and/or a multiple model extended Kalman filter is used.

According to a further optional embodiment, a noisy measurement for the given next point in time is obtained. The probability distribution of the scene tuple is updated depending on the noisy measurement for the given next point in time.

According to a further optional embodiment, for generating the conditional probability distribution of the scene tuple a stochastic filter or a multiple model Kalman filter or a multiple model unscented Kalman filter or a multiple model extended Kalman filter is used.

According to a second embodiment of the present invention, for predicting the development of a traffic scene involving several participants, a set of particles as instances of the scene tuples is generated given a noisy measurement and a map, wherein the noisy measurement comprises for each participant a position measurement and a heading measurement and an absolute velocity measurement of the participant. Each participant is characterized by a participant tuple and the participant tuple comprises a state tuple of several state properties, a route intention characterization, a maneuver intention characterization and an action intention characterization. The state tuple of several state properties for each participant represents a global position and a heading and an absolute velocity of the participant. The traffic scene is characterized by a scene tuple comprising one participant tuple for each participant, and a probability characterization. The participants of the traffic scene are for example agents and the traffic scene comprises of a set of agents. The traffic scene is for example a traffic scene S and the set of agents is for example a set of agents $\mathcal{V}$ where

$$\mathcal{V} = \{V^0, \Lambda, V^K\}$$

and $K \in \mathsf{N}_0$ .

The participants of the traffic scene may, for example, be vehicles.

The state tuple of several state properties is, for example, representative for a dynamic state x. The state properties may comprise the Cartesian position and/or heading and/or absolute velocity of the respective participant. The dynamic state $\mathbf{x}_t^i = [x_t^i, y_t^i, \theta_t^i, v_t^i]^\mathrm{T}$ at a time step $t$ of an agent $V^i$ may comprise the Cartesian position, heading, and absolute velocity of the respective agent $V^i$. The set of agents is represented by their dynamic state $X$.

The noisy measurement is for example a noisy measurement $Z$. An algorithm can use high-level cuboid objects as a measurement $Z$, which can be derived using different sensors.

Optionally a Filter may be implemented for the generation of the set of particles. The choice of filter may depend on the distribution of the belief and/or linearity of the system. The filter is, for example, a stochastic filter or a particle filter.

The state tuples are generated at a given current point in time for each participant depending on the map and the noisy measurement.

Each route intention characterization is generated at the current point in time for each participant depending on the map and the respective state tuple. The route intention characterisation is in particular representative for a route intention $r$, where the set of agents is characterised by their route intention $R$.

Each maneuver intention characterization at the current point in time is generated for each participant depending on the map and the respective route intention characterization of the participant and under consideration of the respective state tuple and the state tuples of the other participants. The maneuver intention characterisation is in particular representative for a maneuver intention $\boldsymbol{m}$ , where the set of agents is characterised by their maneuver intention $M$.

An action intention characterization at the current point in time is generated for each participant depending on the map, the state tuple of the respective participant, the maneuver intention characterization of the respective participant and under consideration of the state tuples of the other participants. The action intention characterization may be for example an action intention characterization **a** where the actions of all agents are denoted as $A$.

Optionally, for generating the action intention characterization of a participant, the route intention characterisation of the respective participant is considered. For example, generating the maneuver intention characterisation and the action intention characterisation for a participant under consideration of other participants allows for a prediction of the development of the traffic scene where a varying number of traffic participants and a combinatoric interaction between traffic participants is considered.

For a given next point in time and for each particle the state tuples at the given next point in time are predicted for each participant depending on the state tuples at the given current point in time and the action intention characterization at the current point in time for the respective participant.

According to an optional embodiment, a particle filter using a Monte Carlo Inference is implemented for the generation of the set of particles.

According to a further optional embodiment, a noisy measurement for the given next point in time is obtained. Each probability characterization is updated depending on the noisy measurement for the given next point in time.

According to a further optional embodiment, the particles are resampled depending on the noisy measurement. The resampling of the particles allows, for example, to avoid particle degeneracy.

According to a further optional embodiment, a breadth-first search is implemented for generating the route intention characterization for each participant. For generating the route intention characterization, a set of possible route intention hypotheses may be used.

According to a further optional embodiment, the route intention characterization is represented by a sequence of consecutive lane segments and/or the route intention characterization defines a path through a road network the participant follows where the path comprises turning right and/or turning left and/or continuing straight ahead at an intersection.

According to a further optional embodiment, the maneuver intention characterization characterizes a sequential order, in which the respective participant is going to cross and/or merge at an intersection relative to another participant. The other participant may include several other participants. For generating the maneuver intention characterization for each participant a conflict area is determined, that represents an intersecting area of the route intention characterization of the respective participant and the route intention characterization of the other participant.

According to a further optional embodiment, an influence is provided, where the influence represents in particular participant dynamics and/or a speed limit and/or a preceding participant and/or a road curvature and/or a conflicting participant and/or traffic lights and/or a yield line and/or a stop lines and/or a street sign and/or a road geometry. An acceleration range is determined depending on the influence. The action intention characterization is generated depending on the acceleration range.

Optionally, the map may be characterized by a road network with topological information and/or geometric information and/or infrastructure information and/or traffic rules.

According to a further optional embodiment, the noisy measurement represents high-level cuboid objects, which are derived by a single sensor or by multiple sensors of same and/or different type.

According to a further optional embodiment, the consideration of the state tuples of the other participants for generating the maneuver intention characterization and/or the action intention characterization for each participant is based on a Bayesian-Network approach.

According to a further optional embodiment, a multiparticipant trajectory is predicted based on mean values of the respective state tuples of a respective participant given the route intention and the maneuver intention of each participant for a given number of discrete points of time.

Further, a device for predicting the development of a traffic scene involving several participants is provided to execute the method for predicting the development of a traffic scene involving several participants or one of its optional embodiments.

Furthermore a computer program product is provided for predicting the development of a traffic scene involving several participants, where an execution of the computer program product by a computer or a control device results in an execution of the method for predicting the development of a traffic scene involving several participants or one of its optional embodiments by the computer or the control device respectively.

Optionally the problems of intention estimation and motion prediction are solved in a combined fashion, by introducing high-level discrete decisions such as route intention and maneuver intention, which form multiple models or hypotheses for the future motion of traffic participants, and defining behavior models given each of these hypotheses. By tracking the traffic participants over time and comparing their actual motion with these multiple hypotheses, a probability distributions over the hypotheses can be inferred, which is representative for the intention estimation and is used to probabilistically predict their future motion, which is representative for motion prediction in dependence of the inferred hypotheses distribution and the defined behavior models.

As the future motion of multiple traffic participants is interdependent, it is explicitly accounted for the combinatorial aspect of prediction, by representing all participants with their intention hypotheses and dynamic state within the filter state space for both the intention estimation, for example using filtering, and the motion prediction, for example using a forward simulation. Therefore, instead of predicting single participants on their own, possible outcomes of the complete scene are predicted.

As the forward simulation uses the same behavior models as are used for the probability estimation, which represents a comparison of actual motion with hypotheses, and the current estimated belief over the probability distribution is used as a starting point for the forward simulation, both problems are tackled in a combined fashion.

## BRIEF DESCRIPTION OF THE DRAWINGS

Detailed embodiments of the invention and also further aspects will be described in the following with reference to the accompanying drawings:

Figure 1 depicts an example of a dynamic Bayesian network showing the interdependencies between agents, dependencies between variables of a single agent (X,R,M,A,Z) and dependencies between successive time steps;

Figure 2 depicts an exemplary initial sample generation (1-4), motion prediction (5), and particle weighting (6), shown for a single participant;

Figure 3 shows an example of possible combinations of routes;

Figure 4 depicts an example for Breadth-first search for possible routes of length $l_H$ on lane graph.

Figure 5A,B show possible conflict areas from $V^0$'s perspective for going straight and four possible maneuvers for $V^0$ turning left;

Figure 6 depicts an example of possible upper and lower bounds of the action models of the single influences, used to define the action probability distribution;

Figure 7 shows a detailed evaluation of agent $V^0$ in scene 1 and a comparison of interaction-aware and unaware and constant-turn-rate-and-velocity (CTRV) models;

Figure 8 depicts an example of route and maneuver estimation of agent $V^0$ in scene 1b and a comparison of interaction-aware model with and without maneuver distinction.

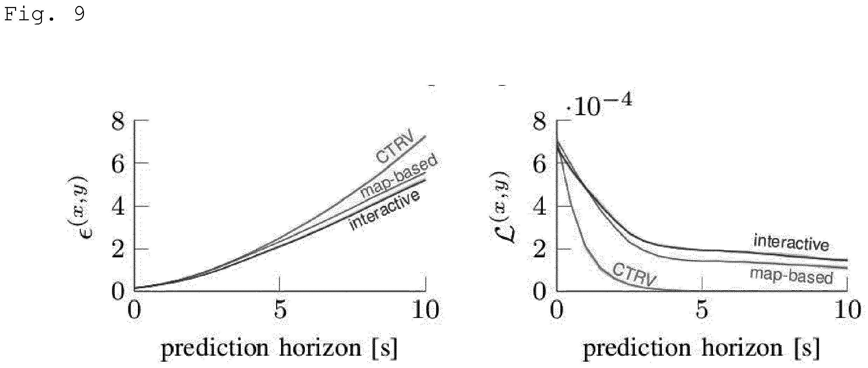

Figure 9 depicts an example of prediction error and likelihood in five different driving scenarios.

## DETAILED DESCRIPTION

Planning for autonomous driving in complex, urban scenarios requires accurate trajectory prediction of the surrounding drivers. Their future behavior depends on their route intentions, the road-geometry, traffic rules and mutual interaction, resulting in interdependencies between their behavior. A probabilistic prediction framework based on a dynamic Bayesian network is presented, which represents the state of the complete scene including all agents and respects the aforementioned dependencies. Markovian, context dependent motion models are proposed to define the interaction-aware behavior of drivers. At first, the state of the dynamic Bayesian network is estimated over time by tracking the single agents via sequential Monte Carlo inference. Secondly, a probabilistic forward simulation of the network's estimated belief state is performed to generate the different combinatorial scene developments.

This provides the corresponding trajectories for the set of possible, future scenes. This framework can handle various road layouts and number of traffic participants. We evaluate the approach in online simulations and real-world scenarios. It is shown that the interaction-aware prediction outperforms interaction-unaware physics- and map-based approaches.

I. INTRODUCTION

Intention estimation and motion prediction of traffic participants help autonomous vehicles to determine their trajectory.

A. Intention Estimation

Methods for estimating route and maneuver intentions are discriminative classifiers (e.g., support vector machines (SVMs), random forests (RFs), artificial neural networks (ANNs)) and probabilistic graphical models (e.g., hidden Markov models (HMMs), Bayesian networks (BNs)). For this purpose, the set of possible intentions is typically predefined offline and the models are learned for these fixed number of classes. For highways, this set usually comprises lane change left, lane change right, and keep lane. For intersections, the desired route is mostly represented by the turning directions left, right, and straight. Besides the intention of a lane change or the desired route, more detailed intentions can be distinguished. A binary longitudinal classification allows to determine whether to yield or stop before an intersection.

A more general framework is able to generate the set of possible intentions online: they determine the possible route alternatives and the corresponding yield positions using a map and estimate the intentions.

Interactions between traffic participants are often not considered. When a motion of multiple vehicles is interdependent, however, this may result in inaccurate predictions, especially for longer prediction horizons (e.g., if a vehicle approaching an intersection has to decelerate because of a slow vehicle in front, without considering interactions, it might be misleadingly inferred that it intends to turn). Investigating a so-called freezing robot problem, has shown that agents typically engage in joint collision avoidance and cooperatively make room to create feasible trajectories. Therefore, possible future interactions between agents should be taken into account.

Explicitly modeled interdependencies between vehicles within their intention estimation framework include: the dependency on the preceding vehicle is considered in order to improve the estimation at intersections. Also, interdependencies between multiple vehicles are modeled using object oriented probabilistic relational models with learned probability tables. They automatically extract the possible routes from the map and distinguish different interaction types depending on the route relations - merge, cross, diverge, follow - of vehicles. Promising results are shown using a long short-term memory (LSTM) based route classification for intersections, considering the states of up to seven surrounding vehicles, therefore, respecting possible interactions implicitly.

An approach focuses on intention estimation with discrete classes, but does not predict continuous trajectories needed for many motion planning algorithms.

B. Trajectory Prediction

Simple trajectory prediction methods are physics-based and assume models like constant velocity, not considering the situational context. Especially at intersections and for long prediction horizons, these models tend to have low accuracy due to the high dependency of the drivers' actions on the road geometry, traffic rules and interactions to surrounding vehicles. Trajectory prediction that incorporates contextual information may be based on regression methods (e.g., Gaussian processes (GPs), RFs, ANNs) or planning-based methods. Velocity profiles with heteroscedastic variance for stopping at an intersection are learned using GPs. They include knowledge about the upcoming intersection, but do not consider other vehicles. These models allow an interaction-aware forward simulation, but do not explicitly infer route or maneuver intentions.

C. Estimation and Prediction

Besides approaches that are either concerned about intention estimation or trajectory prediction, there is effort to solve these problems together: A two-staged approach is employed, in which they first classify a traffic situation into one of multiple predefined driving situations and then predict the velocity profile using situation-specific models. As these profiles only depend on features of the current situation (e.g., states of preceding vehicles), but do not incorporate the prediction of the surrounding vehicles, future interdependencies are ignored. Another combined approach considers that highway maneuvers are first estimated based on multi-agent simulations and then used as input for a continuous trajectory prediction. Thus, the two problems are solved separately, but the trajectory prediction is improved by the maneuver and route estimates.

While autonomous driving was pioneered by universities such as Carnegie Mellon and the Bundeswehr University Munich in the 1980s already, it is still considered a big challenge to integrate autonomous vehicles into real traffic.

A major difficulty is the interaction with human drivers. Autonomous vehicles need to estimate the intentions and anticipate the future behavior of humans in order to plan collision-free trajectories and drive in a foresighted, efficient and cooperative manner. As intentions cannot be measured directly and humans have individual and complex behavior, predictions will always be afflicted with uncertainty. Simple prediction approaches such as constant turn rate and velocity may be sufficient for short term predictions and non-interactive situations. However, in complex urban scenarios, they quickly come to a limit. The mixture of crossing, merging and diverging lanes and corresponding traffic rules create a complex structure and a stronger need for interaction between traffic participants. The behavior of a driver depends on his intentions, the interactions to surrounding traffic and the static context, such as the road geometry. Furthermore, the future trajectory of a vehicle does also depend on how the complete situation evolves over time and, therefore, on how other agents are going to act. This introduces the need for combinatorial and interaction-aware motion prediction, still representing a great challenge today.

The behavior prediction framework explicitly considers the intentions of drivers and the interdependencies between their future trajectories.

A development of a traffic situation is modeled as a stochastic process comprising multiple interacting agents. The decision making process of an agent is divided into three hierarchical layers: which route it is going to follow (route intention), whether it is going to pass a conflict area at an intersection before or after another agent (maneuver intention), and what continuous action it is going to execute. First, the set of possible routes and maneuvers is queried online given a digital map and the agents' poses. Each agent then acts according to context-dependent behavior models given their route and maneuver intentions and the current environment. Describing this process as a dynamic Bayesian network (DBN) allows to specify causal as well as temporal dependencies and consider uncertainty in measurement and human behavior. Sequential Monte Carlo inference, also known as particle filtering, enables the use of hybrid, nonlinear system models and the representation of arbitrary probability distributions. Using observations of the agents' poses and velocities, Bayesian statistics allow for an estimation of the intentions and, therefore, for a more accurate probabilistic trajectory prediction by forward simulation of the DBN. In the current invention, it is focused on unsignalized intersections due to the prevalence of interdependencies between vehicles.

II. PROBLEM STATEMENT

A traffic scene $S$ comprises a set of agents

$$\mathcal{V} = \{V^0, \text{L}, V^K\}$$

, with $K \in N_0$, in a static environment (map) with discrete time, continuous state, and continuous action space. The map comprises a road network with topological, geometric and infrastructure (yield lines, traffic signs, etc.) information as well as the prevailing traffic rules. At time step $t$, the set of agents $\mathcal{V}$ is represented by their dynamic states $X = [\mathbf{x}_t^0, \text{L}, \mathbf{x}_t]$, route intentions $R = [r_t^0, \text{L}, r_t]$, and maneuver intentions $M = [m_t^0, \text{L}, m_t]$. The dynamic state $\mathbf{x}_t^i = [x_t^i, y_t^i, \theta_t^i, v_t^i]^T$ of agent $V^i$ comprises the Cartesian position, heading, and absolute velocity. Its length and width are considered to be given deterministically by the most recent measurement and, for the sake of brevity, are not included within $\mathbf{x}^i$. The route intention $r_t^i$ defines a path through the road network the agent desires to follow, the maneuver intention $m_t^i$ the desired order relative to other agents in cases of intersecting or merging routes. At each time step, each agent executes an action $\mathbf{a}_t^i$ that depends on its intentions, the map and the dynamic states of all agents, transforming the current dynamic state $\mathbf{x}_t^i$ to a new state $\mathbf{x}_{t+1}^i$. The actions of all agents are denoted as $A = [\mathbf{a}_t^0, \text{L}, \mathbf{a}_t^K]^T$. The complete dynamic part of a scene is thus described by $S=[X,R,M,A]^T$. At each time step, a noisy measurement Z=[$\mathbf{z}^0$,L,$z^K$]$^T$ with $\mathbf{z}_t^i = [z_{x,t}^i, z_{y,t}^i, z_{\theta,t}^i, z_{v,t}^i]^T$ is observed according to the distribution $p(Z_t|X_t)$, that contains information about the dynamic states of all agents.

Anbjective is twofold: one part is to estimate the route intentions $R$ and maneuver intentions $M$ of all agents at the current time. The other part is to predict the future dynamic states $X$ up to a temporal horizon $T$.

III. APPROACH

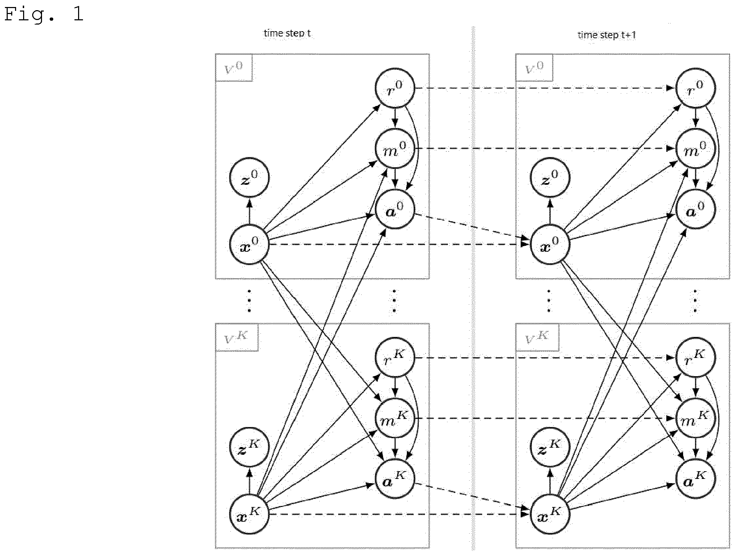

The development of a traffic scene is modeled as a Markov process in the form of a DBN, comprising all agents in a scene. This allows to explicitly model relations between agents, include domain knowledge and handle the uncertainty of measurements and human behavior. Each agent follows its own decision making process, which is divided into three hierarchical layers: the route intention, the maneuver intention and the continuous action. The random variables of the presented DBN and their causal and temporal dependencies are depicted in Figure.1 are explained in detail later in this section. In order to account for changing situations, the network structure is adapted online (creating and deleting agents as well as route and maneuver hypotheses). Thus, it can be applied to varying situations with an arbitrary number of agents, intention hypotheses and different road layouts. As this DBN describes a hybrid, nonlinear system with a multi-modal, non-Gaussian belief, sequential importance resampling is used for inference, allowing to represent arbitrary probability distributions. On the implementation level, it allows the integration of existing libraries that expect deterministic input. The random variables and their causal and temporal dependencies of the present DBN are depicted in Figure. 1 and are explained within the remainder of this section.

A. Estimation and Prediction

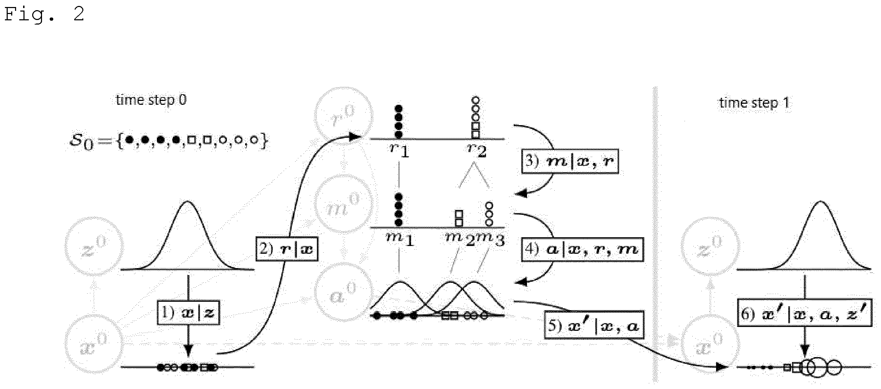

The goal of this framework is to estimate all drivers' intentions (route and maneuver) and to predict their future trajectories. The general procedure is exemplarily depicted in Figure.2: Initially, a set of particles $\mathbf{S}_0 = \{S_0^1, \mathrm{L}, S_0^N\}$, with $S^i = [X^i, R^i, M^i, A^i]^T$ representing the complete scene, is sampled (steps 1-4) according to the measurement and the map: $S_0^i : P(X_0, R_0, M_0, A_0 \mid Z_0, \mathrm{map})$, with corresponding weights $\omega_0^i = 1/N$. Then, each particle is predicted to the subsequent time step (step 5) according to the transition probability: $S_{t+1}^i : P(S_{t+1} \mid S_t^i)$. As soon as a new measurement is available, the particle weights get updated, which reflect the probability characterization according to the measurement likelihood (step 6) : $\omega_t^i = P(Z_t \mid X_t^i)\, \omega_{t-1}^i$. The actual probability of a set of intentions $(R_t, M_t)$ is given by

$$P(R_t, M_t) = \frac{\sum_{j \in \mathrm{J}} \omega_t^j}{\sum_{i=1}^{N} \omega_t^i}, \mathrm{J} := \{ j \mid R_t^j = R_t, M_t^j = M_t \}. \tag{1}$$

For the intention estimation process, the DBN is thus applied as a filter, comparing the different model hypotheses to the actual observations. The intention of a single agent can be derived through marginalization of the belief.

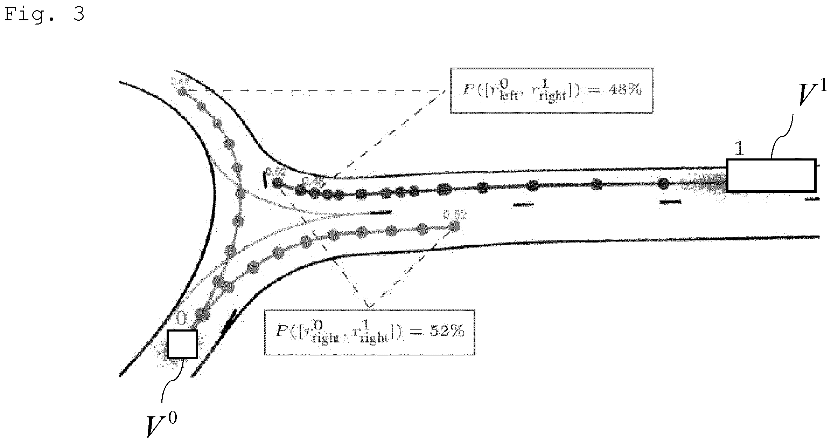

As DBNs are generative models, i.e., they can generate values of any of their random variables, it is possible to do a probabilistic forward simulation by iteratively predicting the current belief (including the estimated intentions) into subsequent time steps, applying the same models as for the filtering. As can be seen in Figure.1, the action of an agent is modeled to be not directly dependent on the actions or intentions of others, but only on its own intentions and the dynamic states of all agents. Thus, cyclic dependencies are avoided and one prediction step of an agent can be executed independently of the prediction steps of other agents. However, as an agent's future actions depend on other agents' future state, which in turn depend on their current intentions and actions, an interdependency between their future trajectories emerges over time, as shown in Figure.3.

In order to reduce complexity and improve interpretability of the trajectory prediction, the forward simulation is not done for each particle, but for the mean dynamic state of all vehicles given their route and maneuver intentions. For each *combination (R,M)* within **S**, one multi-agent trajectory is generated and weighted with the corresponding probability *P(R,M)*. Due to the interdependencies of multiple agents' future trajectories, this combinatorial aspect cannot be neglected within the prediction of the scene development.

The remainder of this section gives a detailed explanation of the single DBN nodes and their probability distributions.

B. Vehicle Dynamics

The action of each agent is defined as

$$\mathbf{a} = [a, \dot{\varphi}]^T$$

with the longitudinal acceleration *a* and the yaw rate

$$\dot{\varphi}.$$

It is the result of the decision making process, which is influenced by the current context and the agent's intentions, and is also estimated as a random variable of the DBN. The transition of the dynamic state is given by the probability distribution $P(\mathbf{x'} \mid \mathbf{x}, \mathbf{a}) = N(\hat{\mathbf{x}}', \mathbf{Q})$, with

$$\hat{\mathbf{x}}' = \begin{pmatrix} \hat{x}' \\ \hat{y}' \\ \hat{\theta}' \\ \hat{v}' \end{pmatrix} = \begin{pmatrix} x + v\Delta T \cos(\theta') + \frac{1}{2} a\Delta T^2 \cos(\theta') \\ y + v\Delta T \sin(\theta') + \frac{1}{2} a\Delta T^2 \sin(\theta') \\ \theta + \dot{\theta}\Delta T \\ v + a\Delta T \end{pmatrix} \tag{2}$$

and $\mathbf{Q} = \mathrm{diag}(\sigma_x^2, \sigma_y^2, \sigma_\theta^2, \sigma_v^2)$. Although this model is simplistic, it should be sufficient for prediction purposes.

C. Measurement

The proposed algorithm uses high-level cuboid objects as measurements, which can be derived by a magnitude of different sensors. Hence, low-level sensor specifics are abstracted. The data association, i.e., object detection and tracking, is considered to be given. The dynamic state **x** is measured with zero-mean Gaussian noise. The measurement $\mathbf{z}=[x_z, y_z, \theta_z, v_z]^\mathsf{T}$ is distributed according to $P(\mathbf{z}|\mathbf{x})=\mathrm{N}(\hat{\mathbf{z}}, \mathbf{R})$, with $\hat{\mathbf{z}}=\mathbf{x}$ and $\mathbf{R} = \mathrm{diag}(\sigma_{z_x}^2, \sigma_{z_y}^2, \sigma_{z_\theta}^2, \sigma_{z_v}^2)$.

D. Route Intention

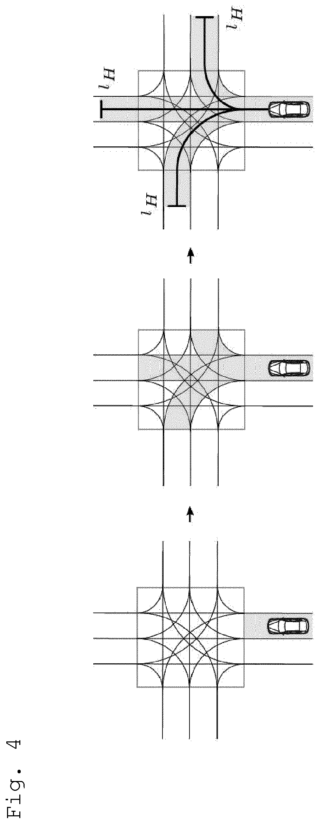

The desired route $r \in \mathrm{R}$ of an agent forms the first layer of the decision making process and serves as a path that guides a driver's behavior. It is represented by a sequence of consecutive lane segments. In every time step, the set of possible routes **R** is determined given the agent's pose, the topological map, and a specified metric horizon $l_H$. A breadth-first search is applied on the lane graph starting with the current lane matching (see Figure.4).

The route of an agent mainly serves two purposes: Firstly, it allows to define relevant features along an agent's planned path such as the road curvature ahead or longitudinal distances to stop lines. Secondly, the routes of multiple agents allow to build relationships between agents on complex road layouts. Two routes are related by dividing them into parts that either merge, diverge, cross, are identical, or have no relevant relation at all. Different road junction types such as roundabouts, intersections or highway entrances can thus be broken down into these types of relations, allowing for a better generalization. Typical relations between agents comprise distances to merging or crossing areas of their routes and corresponding right of way rules. As each route has a different geometry and may imply different traffic rules and relations to other agents, the route directly influences a driver's actions.

Initially, the desired route $r$ is sampled uniformly from the set of possible routes **R** according to $P(r_i|\mathbf{x},\mathrm{map})=|\mathrm{R}|^{-1}$, $\forall r_i \in \mathbf{R}$. Due to the fact that the route is only considered up to a specific horizon, a binary matching function $s_r(r',r):\mathrm{R}'\times\mathrm{R}\to\{0,1\}$ is used to determine which of the routes $r'\in\mathrm{R}'$ are possible successors of the current route $r$ (i.e., imply the same decisions at each contained intersection) and which are not. If there are multiple candidates (in case of a route split), again, the route is sampled uniformly:

$$P(r_j' \mid r_i, \mathbf{x}, \mathrm{map}) = \frac{s_r(r_j', r_i)}{\sum_{r' \in \mathrm{R}'} s_r(r', r_i)}. \tag{3}$$

E. Maneuver Intention

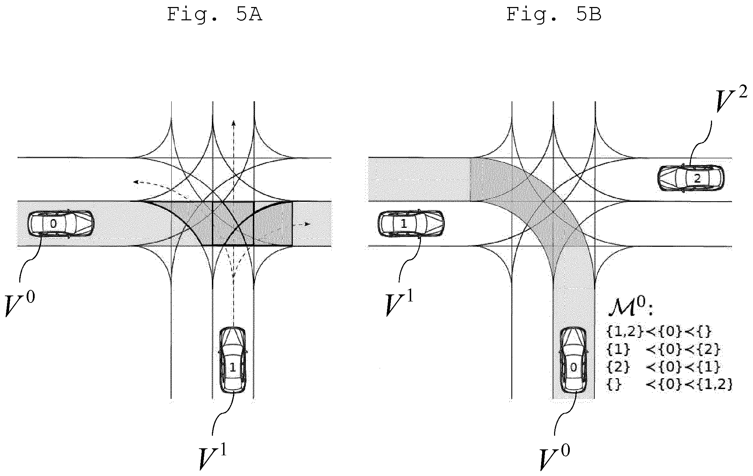

The desired maneuver $m \in \mathrm{M}$ forms the second layer of the decision making process and describes the desired sequence, in which agents are going to merge or cross at intersections. Therefore the notion of conflict areas is introduced: Given two agents on two routes, their conflict area is defined by the intersecting set of the areas of both routes, i.e., the area in which their lanes overlap. It is assumed that a driver doesn't know which route other agents are going to follow, thus, all possible conflict areas of one conflicting agent have to be considered (see Figure.5A). In order to avoid collisions, agents have to schedule their passing sequence.

A maneuver of vehicle $V^i$ states for all pairs $\langle V^i, V^j \rangle$ that have a *potential* conflict (at least one route hypothesis of vehicle $V^j$ has a conflict with $V^i$ 's intended route), whether $V^i$ will pass their conflict area first ($V^i \mathbf{p} V^j$) or not ($V^i \mathbf{f} V^j$). The set of possible maneuvers **M** can be derived given the agent's route, the map, and the dynamic states of all agents. An example can be seen in Figure.5B.

Similarly to the route, the desired maneuver $m$ is initially sampled uniformly from the set of possible maneuvers **M** according to $P(m_i \mid X, r, map) = |M|^{-1}, \forall m_i \in$ M. As situations change over time, the set of possible maneuvers may change as well (e.g., a new agent arrives or an existing agent traverses a conflict area). Hence, for further time steps, a matching function $s_m(m', m)$: **M'** $\times$ **M** $\to$ **{0,1}** determines which of the new maneuvers $m' \in$ **M'** are possible successors of the current maneuver $m$ (i.e., there are no contradictory passing sequences) and which are not. If there are multiple matching candidates, again, the maneuver is sampled uniformly.

F. Action Model

The action $\mathbf{a} = [a, \dot{\theta}]$ of a driver depends on his route and maneuver intentions, the dynamic states of all agents, and the map. It forms the third layer of the decision making process. Within this section, a heuristics-based probabilistic action model $P(\mathbf{a}|r, m, X, map)$ is defined to show the potential of the general framework. In order to narrow down the large number of dependencies, a set of submodels is defined, each handling one so-called influence. Each influence comprises a subset of the available features and constrains the acceleration to a range $[a^{min}, a^{max}]$ that is plausible (e.g., not leading to collisions or violations of traffic rules) given that specific influence.

The following table shows examples of influences considered within this invention, their corresponding features and action ranges. These influences represent the current context on which an agent's actions are based on and can be derived deterministically given the variables of the DBN.

| Influence | Features | Action Range |
|---|---|---|
| vehicle dynamics | - | $[a_{\mathrm{vd}}^{\min}, a_{\mathrm{vd}}^{\max}]$ |
| speed limit | $d_{v_{\lim}}$, $v_{\lim}$, $v^i$ | $[-\infty, a_{\mathrm{IDM}}^{\max}]$ |
| preceding agent $V^p$ | $d^p$, $v^p$, $v^i$ | $[-\infty, a_{\mathrm{IDM}}^{\max}]$ |
| road curvature | $d_\rho$, $\rho$, $v^i$ | $[-\infty, a_{\mathrm{curve}}^{\max}]$ |
| conflicting agent $V^c$ | $d_{\mathrm{exit}}^c$, $\chi^{i,c}$, $d_{\mathrm{entry}}^c$, $v^c$, $d_{\mathrm{yield}}^i$, $d_{\mathrm{entry}}^i$, $d_{\mathrm{exit}}^i$, $v^i$ | $[a_{\mathrm{conf}}^{\min}, a_{\mathrm{conf}}^{\max}]$ |

The influence vehicle dynamics restricts the range of possible accelerations to the constant range $[a_{\mathrm{vd}}^{\min}, a_{\mathrm{vd}}^{\max}]$. Speed limits are defined by a set of pairs of speed limit $v_{\lim}$ and distance along the routed $d_{v_{\lim}}$ where it becomes effective. A preceding agent $V^p$ is described by its relative distance $d^p$ and its velocity $v^p$. For both of these influences, a so-called IDM is employed, dictating a maximum reasonable acceleration

$$a_{\mathrm{IDM}}^{\max} = a_{\mathrm{d}} \left( 1 - \left( \frac{v^i}{v_{\lim}} \right)^\delta - \left( \frac{d_{\mathrm{d}} + v^i T_d + \frac{v^i(v^i - v^p)}{2\sqrt{|a_{\mathrm{d}} b_{\mathrm{d}}|}}}{d^p} \right)^2 \right). \qquad (4)$$

The parameters minimum spacing $d_{\mathrm{d}}$, desired time headway $T_{\mathrm{d}}$, comfortable vehicle acceleration $a_{\mathrm{d}}$, braking deceleration $b_{\mathrm{d}}$, and acceleration exponent $\delta$ have to be specified. Although not part of the evaluation, the influences red traffic light and stop sign are also handled using the equation (4) by setting $v^p = 0$ and $d^p$ to the corresponding distance.

As the IDM was primarily designed for highway scenarios, the curvature of the road as well as merging or intersecting lanes are not considered. Thus, the following models are defined allowing the prediction in urban scenarios:

The model for the influence curvature is based on a desired maximum lateral acceleration $a_{\mathrm{lat}}^{\max}$ that implies a maximum

velocity $v_\rho = \sqrt{\rho a_{\text{lat}}^{\max}}$ at a given curve radius $\rho$. The maximum acceleration of $V^i$ for one time step $\Delta T$ to still be able to reach the velocity $v_\rho$ at the corresponding distance $d_\rho$ with the comfortable braking deceleration $b_d$ is

$$a_{v_\rho, d_\rho}^{\max} = \tilde{a} =$$

$$\frac{-2v + \Delta T b_d + \sqrt{4v\Delta T b_d + \Delta T^2 b_d^2 - 8b_d d_\rho + 4v_\rho^2}}{2\Delta T}, \tag{5}$$

which can be determined by the following equations:

$$v_1 = v + \tilde{a}\Delta T$$
$$v_\rho = v_1 + b_d \Delta T_2$$
$$d_1 = v\Delta T + \tfrac{1}{2}\tilde{a}\Delta T^2$$
$$d_\rho = d_1 + v_1 \Delta T_2 + \tfrac{1}{2} b_d \Delta T_2^2$$

The smallest allowed acceleration of all curvature distance pairs along the route is used. This results in a foresighted curvature approach.

The conflict model is based on conflict areas at overlapping lanes where vehicles have to coordinate a specific sequence of passing. A conflict of agent $V^i$ with another agent $V^c$ is described by the right of way $\chi^{i,c}$, their velocities and distances to entering and exiting the conflict area and their distances to potential yield lines $d_{\text{entry}}$, $d_{\text{exit}}$, and $d_{\text{yield}}$, respectively. If agent $V^i$ has right of way, results indicate that it is sufficient to assume that it is not influenced by the other agent ( $[a_{\text{conf}}^{\min}, a_{\text{conf}}^{\max}] = [-\infty, \infty]$ ). If agent V' has to yield, it acts according to its desired maneuver m.Each agent that is going to pass before $V^i$ introduces an upper bound of acceleration ( $a_{\text{conf}}^{\max}$ ) , each agent that is going to pass after $V^i$ introduces a lower bound ( $a_{\text{conf}}^{\min}$ ). These accelerations are determined such that a minimum time gap between the two passing vehicles at the overlapping areas is ensured, assuming others drive with constant velocity.

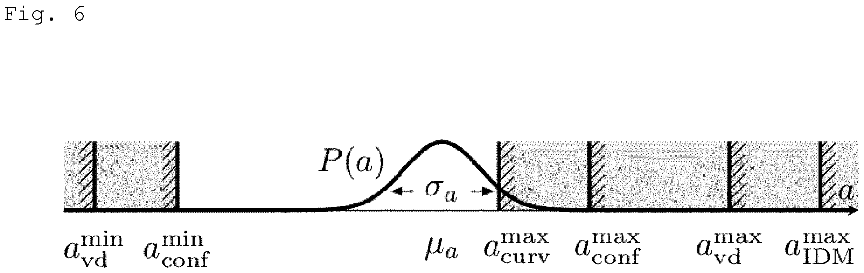

The ranges of feasible accelerations of the single influences are combined as shown in Figure.6 to the overall range

$$a_{\max} = \min\{a_{\text{vd}}^{\max}, a_{\text{curv}}^{\max}, a_{\text{IDM}}^{\max}, a_{\text{int}}^{\max}, a_{\text{conf}}^{\max}\}, \tag{6}$$

$$a_{\min} = \max\{a_{\text{vd}}^{\min}, a_{\text{conf}}^{\min}\}. \tag{7}$$

The measurement data suggests that drivers tend to minimize driving time while not exceeding the plausible acceleration range. Thus, accelerations are sampled from the distribution $P(a|r,m,X,\text{map}) = N(\mu_a, \sigma_a)$, with a mean close to the lowest maximum bound: $\mu_a = a_{\max} - \dfrac{\sigma_a}{2}$ . The yaw rate is sampled from $P(\theta^\&|x,a,\text{map}) = N(\mu_{\theta\&}, \sigma_{\theta\&}$, given a mean yaw rate $\mu_{\theta\&}$ that keeps the agent close to the center of its lane, which is calculated based on simple heuristics.

IV. EVALUATION

In order to assess the necessity of interaction-aware prediction, this model is compared to simpler models in simulated and real driving scenarios. Scenes with interactive behavior are recorded with a measuring vehicle on real roads and on a test-track and are generated with a proprietary traffic simulator. The measuring vehicle's pose and velocity is estimated using GPS/INS. Both lidar and radar sensors are used to detect and track objects nearby. The evaluation parameters can be seen in the following table.

| $\Delta T$ | 0.2 | $\delta$ | 4 | $\sigma_{z_{x/y}}$ | 15m |
|---|---|---|---|---|---|
| $N$ | 1000 | $a_{\text{lat}}^{\max}$ | 2 | $\sigma_{z_\theta}$ | 3.14 |
| $l_{\text{H}}$ | 30 | $\sigma_{x/y}$ | 0.5 | $\sigma_{z_v}$ | 15 ms$^{-1}$ |
| $d_d$ | 2 | $\sigma_\theta$ | 0.05 | $\sigma_{s_{x/y}}$ | 1m |
| $T_d$ | 0.1 | $\sigma_v$ | 1.5 | $\sigma_{s_\theta}$ | 0.03 |
| $a_d$ | 0.7 | $\sigma_a$ | 1.5 | $\sigma_{s_v}$ | 1 ms$^{-1}$ |
| $b_d$ | -0.5 | $\sigma_{\theta\&}$ | 0.05 | | |

To avoid particle deprivation due to resampling, new particles are sampled from the current measurement distribution with probability 0.001. The computing time of one time step of a scene with three vehicles, each having three route options, is approximately 0.3s on an Intel Core i7-5820K CPU @ 3.30GHz with non-optimized C++ code.

A. Intention Estimation

The imprecision of the route (and analogously maneuver) estimate is measured using the Kullback-Leibler divergence

$$D_{\text{KL}}(r^i GT \| r^i) = \sum_{j=1}^{|R|} r_{GT,j}^i \log \frac{r_{GT,j}^i}{P(r_j^i)} \tag{8}$$

from estimate $r^i = [P(r_1^i), \text{L}, P(r_{|R|}^i)]$ to ground truth $r_{GT}^i = [r_{GT,1}^i, \text{L}, r_{GT,|R|}^i]$, with

$$r_{GT,j}^i = \begin{cases} 1 & if \quad V^i \quad follows \quad r_j^i \\ 0 & else \end{cases} \tag{9}$$

The ground truth is generated by labeling the intentions from the recorded data.

The intention estimation of the presented model is evaluated, which is called interactive model, and a solely map-based model. The map-based model uses all of the features given by the map but ignores surrounding vehicles and, therefore, is interaction-unaware. Thus, agents are predicted as if there were no other vehicles around.

As the dataset mostly comprises scenes with little interaction and both models are identical for scenes without interaction, a statistical evaluation of the complete dataset produces similar results. In order to highlight their differences, situations are specifically determined in which multiple vehicles cross an intersection, and hence, containing interdependencies between vehicles. Though intersection crossings are statistically rare in the dataset, these situations tend to be most critical and therefore require explicit evaluation. The intention estimation is evaluated in detail for three scenes:

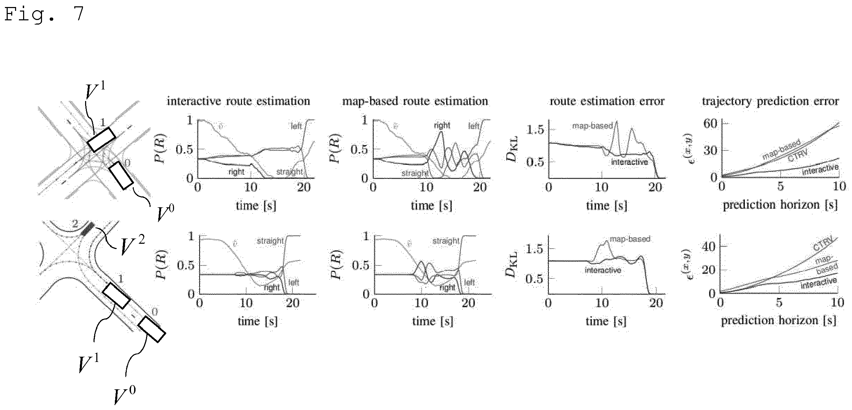

1) Yielding vehicle: in the simulated scene 1 (first row of Figure.7), $V^1$ has right of way and goes straight, $V^0$ has to yield and wants to turn left. To improve readability, at first it is assumed that $V^0$ is actually yielding and therefore only has one possible maneuver ($V^1$ p $V^0$), but multiple possible routes. While $V^0$'s routes for going straight and turning left demand yielding, the route for turning right is free. As $V^0$ waits for $V^1$ ($t$=10-18), it is inferred by the interactive model that turning right is unlikely (as waiting would not be necessary) and turning left and going straight is equally likely (as both routes are blocked). As soon as $V^1$ has left the conflict area, $V^0$ accelerates again and turns, whereby the left route is inferred correctly. The map-based model, however, infers incorrectly that $V^0$ wants to turn right ($t$=13), as this route has the highest curvature, implying the lowest velocity. For $t$>13, as $V^0$ even becomes too slow for turning right, none of the map-based models can explain the actual behavior anymore. Thus, only the particles sampled newly from the measurement survive, resulting in a random oscillation and a momentary improvement of the $D_{KL}$.

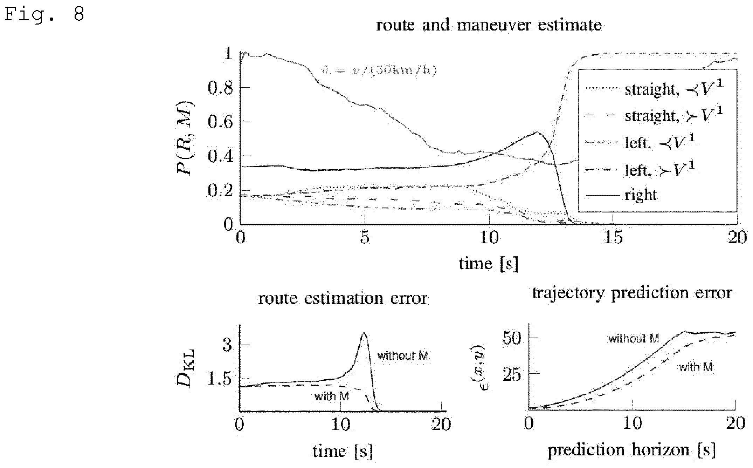

1b) Maneuver distinction: if agents that don't have right of way merge/cross before the prioritized traffic, a maneuver distinction becomes necessary. In order to test the combined maneuver and route estimation, scene 1 is modified, such that $V^0$ crosses first (scene 1b). Figure.8, compares the interactive model with maneuver distinction and without maneuver distinction (assuming $V^0$ will yield): At $t$=0, all routes are equally likely, but as $V^0$ does not decelerate strongly ($t$=2-10), the probability to yield decreases, whereas the probabilities to either turn right (no conflict) or merge/cross before $V^1$ increase. As $V^0$ slows down in order to respect the upcoming curvature ($t$=9-11), the straight route becomes unlikely. Finally ($t$=12-20), as the velocity is still too high for turning right, it is correctly inferred that $V^0$ will turn left and merge before $V^1$ Without the distinction of the two possible maneuvers, assuming $V^0$ is going to yield, it is incorrectly inferred that $V^0$ wants to turn right (as this lane has no conflict), resulting in a higher estimation and trajectory prediction error.

2) Preceding vehicle: In the real driving scene 2 (second row of Figure.7), $V^0$ follows $V^1$ approaching an intersection. As $V^1$ has to yield and therefore decelerates, $V^0$ decelerates as well in order to keep the desired headway distance. All three possible routes of $V^0$ are blocked by the preceding vehicle, hence, it is not possible to infer the route until the preceding agent has passed the intersection( t=17).A uniform distribution is the desired result, which is generated by the interactive method. The map-based method incorrectly infers that $V^0$ wants to turn right(t=10), as it is slowing down (actually caused by the preceding vehicle). For t>10, none of the map-based models can explain the observations anymore, also resulting in a random oscillation.

B. Trajectory Prediction

The accuracy of the trajectory prediction of all agents at time $t$ for the future time step $\tau$ is quantified using the position components of the weighted root mean square error between prediction and measurement

$$\varepsilon_{\tau|t}^{(x,y)} = \sqrt{\sum_{R_t,M_t} P(R_t, M_t) \left( \hat{X}_{\tau|t,R_t,M_t}^{(x,y)} - Z_\tau^{(x,y)} \right)^2}, \qquad (10)$$

and the measurement likelihood

$$\mathsf{L}_{\tau|t}^{(x,y)} = \prod_{R_t,M_t} P(R_t, M_t)\, P(Z_\tau^{(x,y)} \mid \hat{X}_{\tau|t,R_t,M_t}^{(x,y)}). \qquad (11)$$

The interactive model is compared to the map-based model and a ctrv model, which serves as a simple baseline algorithm. It is independent of both the map and surrounding vehicles. The error of the trajectory prediction of $V^0$ for scenes 1 and 2 are depicted in the most right column of Figure.7. The CTRV model performs worse in scene 1, as $V^0$ changes its velocity and orientation more intensely. For the map-based model, the first scene is also more challenging, as $V^0$ stops for a long time, which cannot be explained by the model at all. Its high route estimation error negatively affects its prediction accuracy. The interactive model outperforms the other two approaches in both scenes.

Furthermore, in order to compare the models in a quantitative manner, five different real driving scenes have been recorded on a test track and on real roads. These scenes altogether comprise 15 vehicles, two four-way intersections, two T-junctions, and a roundabout. The statistical results showing the prediction error and measurement likelihood over all scenes and vehicles are depicted in Figure.10. It can be seen that the interaction-aware model outperforms both CTRV and map-based models. Although the differences between the map-based and the interactive model might seem to be rather small, it has to be noted that the time steps in which traffic participants actually interact with each other do not predominate. As shown in Figure.7, however, in scenes where the behaviors of drivers are highly interdependent, interaction-aware prediction becomes essential.

V. CONCLUSIONS

An interaction-aware prediction framework is proposed that is able to estimate route and maneuver intentions of drivers and predict complete scene developments in a combined fashion. Possible routes and maneuvers are generated online given a map and the current belief state. The framework can handle a varying number of traffic participants and different road layouts without the need to predefine a discrete set of classes. It is capable to deal with uncertainty in measurements and human behavior and model interdependencies between drivers. Its particle filtering nature allows to represent the non-linear system dynamics and the multi-modal and hybrid belief state.

Due to the combinatorial aspect of long-term motion prediction, the complexity of inference grows exponentially with the number of considered agents and possible intentions. Nevertheless, it is shown that in cases with close interaction between traffic participants, their interdependencies cannot be neglected. Future work will focus on reducing this complexity and improving behavior model accuracy, e.g., by machine learning, which in turn will reduce the number of needed particles. Furthermore, the actual planned trajectories of the ego vehicle could be taken into account within the forward simulation, in order to evaluate them with respect to how surrounding drivers are likely going to react. Therefore, less conservative actions could be executed, respecting the influence of the ego vehicle on others.

**Claims**

1. A method for predicting the development of a traffic scene involving several participants, with each participant being **characterized by** a participant tuple, the participant tuple comprising a state tuple of several state properties, a route intention characterization, a maneuver intention characterization and an action intention characterization, wherein the state tuple of several state properties for each participant represents a global position and a heading and an absolute velocity of the participant, and with the traffic scene being **characterized by** a scene tuple comprising one participant tuple for each participant, the method comprising:

   - providing a map with corresponding map related information,
   - obtaining a noisy measurement, wherein the noisy measurement comprises for each participant a position measurement and a heading measurement and an absolute velocity measurement of the participant,
   - generating a conditional probability distribution of the scene tuple depending on the noisy measurement and the map, the generation comprising:

      - generating a conditional probability distribution of the state tuple at a given current point in time for each participant depending on the map and the noisy measurement,
      - generating a conditional probability distribution of the route intention characterization at the current point in time for each participant depending on the map and the respective state tuple,
      - generating a conditional probability distribution of the maneuver intention characterization at the current point in time for each participant depending on the map, the respective route intention characterization of the participant and under consideration of the state tuples of the other participants,
      - generating a conditional probability distribution of the action intention characterization at the current point in time for each participant depending on the map, the state tuple of the respective participant, the maneuver intention characterization of the respective participant and under consideration of the state tuples of the other participants, wherein for a given next point in time the probability distribution of the state tuple at the given next point in time for each participant is predicted depending on the state tuple at the given current point in time and the action intention characterization at the current point in time for the respective participant.

2. Method of claim 1, wherein

   - a noisy measurement for the given next point in time is obtained,
   - updating the probability distribution of the scene tuple depending on the noisy measurement for the given next point in time.

3. A method for predicting the development of a traffic scene involving several participants, with each participant being **characterized by** a participant tuple, the participant tuple comprising a state tuple of several state properties, a route intention characterization, a maneuver intention characterization and an action intention characterization, wherein the state tuple of several state properties for each participant represents a global position and a heading and an absolute velocity of the participant, and with the traffic scene being **characterized by** a scene tuple comprising one participant tuple for each participant, and a probability characterization, the method comprising:

- providing a map with corresponding map related information,
- obtaining a noisy measurement, wherein the noisy measurement comprises for each participant a position measurement and a heading measurement and an absolute velocity measurement of the participant,
- generating a set of particles as instances of the scene tuples depending on the noisy measurement and the map, the generation of each particle comprising:

  - generating the state tuples at a given current point in time for each participant depending on the map and the noisy measurement,
  - generating each route intention characterization at the current point in time for each participant depending on the map and the respective state tuple,
  - generating each maneuver intention characterization at the current point in time for each participant depending on the map and the respective route intention characterization of the participant and under consideration of the respective state tuple and the state tuples of the other participants,
  - generating an action intention characterization at the current point in time for each participant depending on the map, the state tuple of the respective participant, the maneuver intention characterization of the respective participant and under consideration of the state tuples of the other participants, wherein for a given next point in time and for each particle the state tuples at the given next point in time are predicted for each participant depending on the state tuples at the given current point in time and the action intention characterization at the current point in time for the respective participant.

4. Method of claim 3, wherein

   - a noisy measurement for the given next point in time is obtained,
   - updating each probability characterization depending on the noisy measurement for the given next point in time.

5. Method of one of the claims 1 to 4, wherein the route intention characterization is represented by a sequence of consecutive lane segments and the route intention characterization defines a path through a road network the participant follows where the path comprises turning right and/or turning left and/or continuing straight ahead at an intersection.

6. Method of one of the claims 1 to 5, wherein the maneuver intention characterization characterizes a sequential order, in which a participant is going to cross and/or merge at an intersection relative to another participant and for generating the maneuver intention characterization for each participant a conflict area is determined, that represents an intersecting area of the route intention characterization of the participant and the route intention characterization of the other participant.

7. Method of one of the claims 3 to 6, wherein

   - an influence is provided, where the influence represents participant dynamics and/or a speed limit and/or a preceding participant and/or a road curvature and/or a conflicting participant and/or traffic lights and/or a yield line and/or a stop lines and/or a street sign and/or a road geometry,
   - an acceleration range is determined depending on the influence,
   - the action intention characterization is generated depending on the acceleration range.

8. Method of one of the claims 3 to 7, wherein the consideration of the state tuples of the other participants for generating the maneuver intention characterization and/or the action intention characterization for each participant is based on a Bayesian-Network approach.

9. Method of one of the claims 1 to 8, wherein a multiparticipant trajectory is predicted based on mean values of the respective state tuples of a respective participant given the route intention and the maneuver intention of each participant for a given number of discrete points of time.

10. 11. A device for predicting the development of a traffic scene involving several participants designed to execute the method according to any one of the claims 1 to 9.

11. A computer program product for predicting the development of a traffic scene involving several participants, where an execution of the computer program product by a computer or a control device results in an execution of the method according to any one of the claims 1 to 9 by the computer or the control device respectively.

EP 3 552 904 B1

**Patentansprüche**

1. Verfahren zum Vorhersagen der Entwicklung einer Verkehrsszene, die mehrere Teilnehmer einbezieht, wobei jeder Teilnehmer durch ein Teilnehmertupel gekennzeichnet ist, wobei das Teilnehmertupel ein Zustandstupel mehrerer Zustandseigenschaften, eine Routenabsichtscharakterisierung, eine Manöverabsichtscharakterisierung und eine Handlungsabsichtscharakterisierung umfasst, wobei das Zustandstupel mehrerer Zustandseigenschaften für jeden Teilnehmer eine globale Position und eine Fahrtrichtung und eine absolute Geschwindigkeit des Teilnehmers umfasst und wobei die Verkehrsszene durch ein Szenentupel gekennzeichnet ist, das ein Teilnehmertupel für jeden Teilnehmer umfasst, wobei das Verfahren Folgendes umfasst:

   - Liefern einer Karte mit entsprechenden kartenbezogenen Informationen,
   - Erhalten einer verrauschten Messung, wobei die verrauschte Messung für jeden Teilnehmer eine Positionsmessung und eine Fahrtrichtungsmessung und eine Messung der absoluten Geschwindigkeit des Teilnehmers umfasst,
   - Erzeugen einer bedingten Wahrscheinlichkeitsverteilung des Szenentupels abhängig von der verrauschten Messung und der Karte, wobei die Erzeugung Folgendes umfasst:

      - Erzeugen einer bedingten Wahrscheinlichkeitsverteilung des Zustandstupels zu einem gegebenen aktuellen Zeitpunkt für jeden Teilnehmer abhängig von der Karte und der verrauschten Messung,
      - Erzeugen einer bedingten Wahrscheinlichkeitsverteilung der Routenabsichtscharakterisierung zu dem aktuellen Zeitpunkt für jeden Teilnehmer abhängig von der Karte und dem jeweiligen Zustandstupel,
      - Erzeugen einer bedingten Wahrscheinlichkeitsverteilung der Manöverabsichtscharakterisierung zu dem aktuellen Zeitpunkt für jeden Teilnehmer abhängig von der Karte, der jeweiligen Routenabsichtscharakterisierung des Teilnehmers und unter Berücksichtigung der Zustandstupel der anderen Teilnehmer,
      - Erzeugen einer bedingten Wahrscheinlichkeitsverteilung der Handlungsabsichtscharakterisierung zu dem aktuellen Zeitpunkt für jeden Teilnehmer abhängig von der Karte, dem Zustandstupel des jeweiligen Teilnehmers, der Manöverabsichtscharakterisierung des jeweiligen Teilnehmers und unter Berücksichtigung der Zustandstupel der anderen Teilnehmer, wobei für einen gegebenen nächsten Zeitpunkt die Wahrscheinlichkeitsverteilung des Zustandstupels zu dem gegebenen nächsten Zeitpunkt für jeden Teilnehmer abhängig von dem Zustandstupel zu dem gegebenen aktuellen Zeitpunkt und der Handlungsabsichtscharakterisierung zu dem aktuellen Zeitpunkt für den jeweiligen Teilnehmer vorhergesagt wird.

2. Verfahren nach Anspruch 1, wobei

   - eine verrauschte Messung für den gegebenen nächsten Zeitpunkt erhalten wird,
   - Aktualisieren der Wahrscheinlichkeitsverteilung des Szenentupels abhängig von der verrauschten Messung für den gegebenen nächsten Zeitpunkt.

3. Verfahren zum Vorhersagen der Entwicklung einer Verkehrsszene, die mehrere Teilnehmer einbezieht, wobei jeder Teilnehmer durch ein Teilnehmertupel gekennzeichnet ist, wobei das Teilnehmertupel ein Zustandstupel mehrerer Zustandseigenschaften, eine Routenabsichtscharakterisierung, eine Manöverabsichtscharakterisierung und eine Handlungsabsichtscharakterisierung umfasst, wobei das Zustandstupel mehrerer Zustandseigenschaften für jeden Teilnehmer eine globale Position und eine Fahrtrichtung und eine absolute Geschwindigkeit des Teilnehmers repräsentiert und wobei die Verkehrsszene durch ein Szenentupel gekennzeichnet ist, das ein Teilnehmertupel für jeden Teilnehmer und eine Wahrscheinlichkeitscharakterisierung umfasst, wobei das Verfahren Folgendes umfasst:

   - Bereitstellen einer Karte mit entsprechenden kartenbezogenen Informationen,
   - Erhalten einer verrauschten Messung, wobei die verrauschte Messung für jeden Teilnehmer eine Positionsmessung und eine Fahrtrichtungsmessung und eine Messung der absoluten Geschwindigkeit des Teilnehmers umfasst,
   - Erzeugen einer Gruppe von Teilchen als Instanzen der Szenentupel abhängig von der verrauschten Messung und der Karte, wobei die Erzeugung jedes Teilchens Folgendes umfasst:

      - Erzeugen der Zustandstupel zu einem gegebenen aktuellen Zeitpunkt für jeden Teilnehmer abhängig von der Karte und der verrauschten Messung,
      - Erzeugen jeder Routenabsichtscharakterisierung zu dem aktuellen Zeitpunkt für jeden Teilnehmer abhängig von der Karte und dem jeweiligen Zustandstupel,
      - Erzeugen jeder Manöverabsichtscharakterisierung zu dem aktuellen Zeitpunkt für jeden Teilnehmer abhängig von der Karte und der jeweiligen Routenabsichtscharakterisierung des Teilnehmers und unter Berücksichtigung des jeweiligen Zustandstupels der Zustandstupel der anderen Teilnehmer,
- Erzeugen einer Handlungsabsichtscharakterisierung zu dem aktuellen Zeitpunkt für jeden Teilnehmer abhängig von der Karte, dem Zustandstupel des jeweiligen Teilnehmers, der Manöverabsichtscharakterisierung des jeweiligen Teilnehmers und unter Berücksichtigung der Zustandstupel der anderen Teilnehmer, wobei für einen gegebenen nächsten Zeitpunkt und für jedes Teilchen die Zustandstupel zu dem gegebenen nächsten Zeitpunkt für jeden Teilnehmer abhängig von den Zustandstupeln zu dem gegebenen aktuellen Zeitpunkt und der Handlungsabsichtscharakterisierung zu dem aktuellen Zeitpunkt für den jeweiligen Teilnehmer vorhergesagt werden.

4. Verfahren nach Anspruch 3, wobei

   - eine verrauschte Messung für den gegebenen nächsten Zeitpunkt erhalten wird,
   - Aktualisieren jeder Wahrscheinlichkeitscharakterisierung abhängig von der verrauschten Messung für den gegebenen nächsten Zeitpunkt.

5. Verfahren nach einem der Ansprüche 1 bis 4, wobei die Routenabsichtscharakterisierung durch eine Folge aufeinanderfolgender Spursegmente repräsentiert wird und die Routenabsichtscharakterisierung einen Weg durch ein Straßennetz definiert, dem der Teilnehmer folgt, wobei der Weg umfasst, an einer Kreuzung rechts abzubiegen und/oder links abzubiegen und/oder weiter geradeaus zu fahren.

6. Verfahren nach einem der Ansprüche 1 bis 5, wobei die Manöverabsichtscharakterisierung eine sequenzielle Reihenfolge kennzeichnet, in der ein Teilnehmer an einer Kreuzung in Bezug auf einen anderen Teilnehmer kreuzt und/oder mit diesem einfädelt, und zum Erzeugen der Manöverabsichtscharakterisierung für jeden Teilnehmer ein Konfliktbereich bestimmt wird, der einen sich überschneidenden Bereich der Routenabsichtscharakterisierung des Teilnehmers und der Routenabsichtscharakterisierung des anderen Teilnehmers repräsentiert.

7. Verfahren nach einem der Ansprüche 3 bis 6, wobei

   - ein Einfluss bereitgestellt wird, wobei der Einfluss Teilnehmerdynamiken und/oder eine Geschwindigkeitsbegrenzung und/oder einen vorherigen Teilnehmer und/oder eine Straßenkrümmung und/oder einen kollidierenden Teilnehmer und/oder Verkehrsampeln und/oder eine Ziellinie und/oder Stopplinien und/oder ein Verkehrszeichen und/oder eine Straßengeometrie repräsentiert,
   - ein Beschleunigungsbereich abhängig von dem Einfluss bestimmt wird,
   - die Handlungsabsichtscharakterisierung abhängig von dem Beschleunigungsbereich erzeugt wird.

8. Verfahren nach einem der Ansprüche 3 bis 7, wobei die Berücksichtigung der Zustandstupel der anderen Teilnehmer zum Erzeugen der Manöverabsichtscharakterisierung und/oder der Handlungsabsichtscharakterisierung für jeden Teilnehmer auf einem Ansatz eines Bayes'schen Netzes beruht.

9. Verfahren nach einem der Ansprüche 1 bis 8, wobei eine Multiteilnehmerbahn anhand mittlerer Werte der jeweiligen Zustandstupel eines jeweiligen Teilnehmers angesichts der Routenabsicht und der Manöverabsicht jedes Teilnehmers für eine gegebene Anzahl diskreter Zeitpunkte vorhergesagt wird.

10. Vorrichtung zum Vorhersagen der Entwicklung einer Verkehrsszene, die mehrere Teilnehmer einbezieht, die gestaltet ist, das Verfahren nach einem der Ansprüche 1 bis 9 auszuführen.

11. Computerprogrammprodukt zum Vorhersagen der Entwicklung einer Verkehrsszene, die mehrere Teilnehmer einbezieht, wobei eine Ausführung des Computerprogrammprodukts durch einen Computer oder eine Steuervorrichtung jeweils eine Ausführung des Verfahrens nach einem der Ansprüche 1 bis 9 durch den Computer oder die Steuervorrichtung ergibt.

**Revendications**

1. Procédé de prédiction du développement d'une scène de circulation impliquant plusieurs participants, chaque participant étant **caractérisé par** un tuple de participant, le tuple de participant comprenant un tuple d'état de plusieurs propriétés d'état, une caractérisation d'intention d'itinéraire, une caractérisation d'intention de manoeuvre et une

**EP 3 552 904 B1**

caractérisation d'intention d'action, dans lequel le tuple d'état de plusieurs propriétés d'état pour chaque participant représente une position globale ainsi qu'un cap et une vitesse absolue du participant, et la scène de circulation étant **caractérisée par** un tuple de scène comprenant un tuple de participant pour chaque participant, le procédé comprenant :

- la fourniture d'une carte avec des informations cartographiques correspondantes,
- l'obtention d'une mesure de bruit, la mesure de bruit comprenant pour chaque participant une mesure de position ainsi qu'une mesure de cap et une mesure de vitesse absolue du participant,
- la génération d'une distribution de probabilité conditionnelle du tuple de scène en fonction de la mesure de bruit et de la carte, la génération comprenant :

- la génération d'une distribution de probabilité conditionnelle du tuple d'état à un instant actuel donné pour chaque participant en fonction de la carte et de la mesure de bruit,
- la génération d'une distribution de probabilité conditionnelle de la caractérisation d'intention d'itinéraire à l'instant actuel pour chaque participant en fonction de la carte et du tuple d'état respectif,
- la génération d'une distribution de probabilité conditionnelle de la caractérisation d'intention de manoeuvre à l'instant actuel pour chaque participant en fonction de la carte, de la caractérisation d'intention d'itinéraire respective du participant et en tenant compte des tuples d'état des autres participants,
- la génération d'une distribution de probabilité conditionnelle de la caractérisation d'intention d'action à l'instant actuel pour chaque participant en fonction de la carte, du tuple d'état du participant respectif, de la caractérisation d'intention de manoeuvre du participant respectif et en tenant compte des tuples d'état des autres participants, dans lequel, pour un instant suivant donné, la distribution de probabilité du tuple d'état à l'instant suivant donné pour chaque participant est prédit en fonction du tuple d'état à l'instant actuel donné et de la caractérisation d'intention d'action à l'instant actuel pour le participant respectif.

2. Procédé selon la revendication 1, dans lequel

- une mesure de bruit pour l'instant suivant donné est obtenue,
- une mise à jour de la distribution de probabilité du tuple de scène en fonction de la mesure de bruit pour l'instant suivant donné dans le temps est réalisée.

3. Procédé de prédiction du développement d'une scène de circulation impliquant plusieurs participants, chaque participant étant **caractérisé par** un tuple de participant, le tuple de participant comprenant un tuple d'état de plusieurs propriétés d'état, une caractérisation d'intention d'itinéraire, une caractérisation d'intention de manoeuvre et une caractérisation d'intention d'action, dans lequel le tuple d'état de plusieurs propriétés d'état pour chaque participant représente une position globale ainsi qu'un cap et une vitesse absolue du participant, et la scène de circulation étant **caractérisée par** un tuple de scène comprenant un tuple de participant pour chaque participant, et une caractérisation de probabilité, le procédé comprenant :

- la fourniture d'une carte avec des informations cartographiques correspondantes,
- l'obtention d'une mesure de bruit, la mesure de bruit comprenant pour chaque participant une mesure de position ainsi qu'une mesure de cap et une mesure de vitesse absolue du participant,
- la génération d'un ensemble de particules comme instances des tuples de scène en fonction de la mesure de bruit et de la carte, la génération de chaque particule comprenant :

- la génération des tuples d'état à un instant actuel donné pour chaque participant en fonction de la carte et de la mesure de bruit,
- la génération de chaque caractérisation d'intention d'itinéraire à l'instant actuel pour chaque participant en fonction de la carte et du tuple d'état respectif,
- la génération de chaque caractérisation d'intention de manoeuvre à l'instant actuel pour chaque participant en fonction de la carte et de la caractérisation d'intention d'itinéraire respective du participant et en tenant compte du tuple d'état respectif et des tuples d'état des autres participants,
- la génération d'une caractérisation d'intention d'action à l'instant actuel pour chaque participant en fonction de la carte, du tuple d'état du participant respectif, de la caractérisation d'intention de manoeuvre du participant respectif et en tenant compte des tuples d'état des autres participants, dans lequel, pour un instant suivant donné et pour chaque particule, les tuples d'état à l'instant suivant donné sont prédits pour chaque participant en fonction des tuples d'état à l'instant actuel donné et de la caractérisation d'intention d'action à l'instant actuel pour le participant respectif.

18

**4.** Procédé selon la revendication 3, dans lequel

- une mesure de bruit pour l'instant suivant donné est obtenue,
- une mise à jour de chaque caractérisation de probabilité en fonction de la mesure de bruit pour l'instant suivant donné est réalisée.

**5.** Procédé selon l'une des revendications 1 à 4,
dans lequel la caractérisation d'intention d'itinéraire est représentée par une séquence de segments de voie consécutifs et la caractérisation d'intention d'itinéraire définit un trajet à travers un réseau routier que suit le participant où le trajet comprend un virage à droite et/ou un virage à gauche et/ou une continuation tout droit à une intersection.

**6.** Procédé de l'une des revendications 1 à 5,
dans lequel la caractérisation d'intention de manoeuvre caractérise un ordre séquentiel, dans lequel un participant au niveau d'une intersection va croiser et/ou se joindre à un autre participant et pour générer la caractérisation d'intention de manoeuvre pour chaque participant une zone de conflit est déterminée, laquelle représente une aire d'intersection de la caractérisation d'intention d'itinéraire du participant et de la caractérisation d'intention d'itinéraire de l'autre participant.

**7.** Procédé selon l'une des revendications 3 à 6, dans lequel

- une influence est fournie, l'influence représentant une dynamique de participant et/ou une limitation de vitesse et/ou un participant précédent et/ou une courbure de la route et/ou un participant conflictuel et/ou des feux de circulation et/ou une voie de priorité et/ou une voie d'arrêt et/ou une plaque de rue et/ou une géométrie routière,
- une plage d'accélération est déterminée en fonction de l'influence,
- la caractérisation d'intention d'action est générée en fonction de la plage d'accélération.

**8.** Procédé selon l'une des revendications 3 à 7, dans lequel la prise en compte des tuples d'état des autres participants pour générer la caractérisation d'intention de manoeuvre et/ou la caractérisation d'intention d'action pour chaque participant est basée sur une approche de réseau bayésien.

**9.** Procédé selon l'une des revendications 1 à 8, dans lequel une trajectoire multi-participants est prédite sur la base de valeurs moyennes des tuples d'état respectifs d'un participant respectif compte-tenu de l'intention d'itinéraire et de l'intention de manoeuvre de chaque participant pour un nombre donné d'instants discrets.

**10.** Dispositif de prédiction du développement d'une scène de circulation impliquant plusieurs participants conçu pour exécuter le procédé selon l'une quelconque des revendications 1 à 9.

**11.** Produit de programme d'ordinateur permettant de prédire le développement d'une scène de circulation impliquant plusieurs participants, où une exécution du produit du programme d'ordinateur par un ordinateur ou un dispositif de commande amène respectivement l'ordinateur ou le dispositif de commande à exécuter le procédé selon l'une quelconque des revendications 1 à 9.

Fig. 1

Fig. 2

Fig. 3

$P([r_{\text{left}}^0, r_{\text{right}}^1]) = 48\%$

$V^1$

$P([r_{\text{right}}^0, r_{\text{right}}^1]) = 52\%$

$V^0$

Fig. 4

Fig. 5A

Fig. 5B

$V^0$

$V^1$

$V^2$

$V^1$

$V^0$

$\mathcal{M}^0$:

$\{1,2\} < \{0\} < \{\}$
$\{1\} \quad < \{0\} < \{2\}$
$\{2\} \quad < \{0\} < \{1\}$
$\{\} \quad < \{0\} < \{1,2\}$

Fig. 6

Fig. 7

Fig. 8

route and maneuver estimate

route estimation error

trajectory prediction error

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2615598 A1

**Non-patent literature cited in the description**

- **STÉPHANIE LEFÈVRE et al.** *Modelling Dynamic Scenes at Unsignalised Road Intersections,* 588758, https://hal.inria.fr/inria-00588758/document